# EUROPEAN PATENT APPLICATION

(11) **EP 1 833 232 A2**
(43) Date of publication of application: **12.09.2007**
(21) Application number: 07250960.7
(22) Date of filing: 08.03.2007
(51) Int. Cl.: H04M 1/04, H04M 1/725

(54) **System and method for outputting data**

(30) Priority: 09.03.2006 JP 2006064585
(71) Applicant: Sony Corporation, Minato-ku Tokyo (JP)
(72) Inventor: Yoshimura, Takeshi c/o Sony Corporation, Tokyo (JP)
(74) Representative: Smith, Samuel Leonard

(57) **Abstract**

A data output system includes an information processing apparatus, a first terminal, a second terminal, and a mounting base device that is electrically connected to one of the first terminal and the second terminal when the one of the first terminal and the second terminal is mounted on the mounting base device, the information processing apparatus includes a storage for storing time-series play data, and a wireless communication unit for communicating with the second terminal in a wireless communication, the first terminal including a storage for storing time-series play data, the second terminal including a first wireless communication unit for communicating with the information processing apparatus in a wireless communication, and the mounting base device including an output unit for outputting time-series play data.

## Description

### CROSS REFERENCES TO RELATED APPLICATIONS

The present invention contains subject matter related to Japanese Patent Application JP 2006-064585 filed in the Japanese Patent Office on March 9, 2006, the entire contents of which are incorporated herein by reference.

### BACKGROUND OF THE INVENTION

### 1. Field of the Invention

The present invention relates to a system and method for outputting data and, in particular, a system and method appropriate for outputting data that is obtained from a plurality of sources.

### 2. Description of the Related Art

Japanese Unexamined Patent Application Publication No. 2003-283609 discloses a data output system. In the disclosed data output system, a cellular phone, when loaded on a charger called a cradle, is charged via a connection terminal arranged on the cradle. At the same time, an audio signal resulting from reproducing audio data stored on the cellular phone is transferred from the cellular phone to the cradle and a sound responsive to the audio signal is output from a loudspeaker arranged in the cradle.

In another proposed data output system, an external audio input terminal is arranged on the cradle. An audio signal resulting from reproducing audio data supplied from an external device via the external audio input terminal is transferred to the cradle, and a sound responsive to the audio signal is output from a loudspeaker arranged in the cradle.

In the known data output systems, the sound is output from the loudspeaker in the cradle in response to the audio data that is obtained from the cellular phone loaded on the cradle or the audio data that is obtained from the external device connected to the external audio input terminal on the cradle. A great deal of data obtained from a plurality of sources is output in this way.

### SUMMARY OF THE INVENTION

In the known data output system, the cellular phone is simply placed on the cradle to output the sound from the loudspeaker in response to the audio signal obtained from the cellular phone. To output the sound from the loudspeaker in response to the audio data obtained from the external device, however, an external reproducing device needs to be connected to an external signal input device using a predetermined cable each time. Outputting data from a plurality of sources thus inconveniences the user.

It is desirable to provide a data output system and a data output method for easily outputting a great deal of data.

In accordance with one embodiment of the present invention, a data output system includes an information processing apparatus, a first terminal, a second terminal, and a mounting base device that is electrically connected to one of the first terminal and the second terminal when the one of the first terminal and the second terminal is mounted on the mounting base device. The information processing apparatus includes a storage for storing time-series play data, and a wireless communication unit for communicating with the second terminal in a wireless communication. The first terminal includes a storage for storing time-series play data. The second terminal includes a first wireless communication unit for communicating with the information processing apparatus in a wireless communication.
The mounting base device includes an output unit for outputting time-series play data. When the mounting base device is electrically connected to the first terminal mounted thereon, the time-series play data stored on the first terminal is output to the mounting base device, and then output from the output unit of the mounting base device. When the mounting base device is electrically connected to the second terminal mounted thereon, the second terminal acquires the time-series play data from the information processing apparatus in a wireless communication and transfers the acquired time-series play data to the mounting base device, and then the output unit of the mounting base device outputs the time-series play data.

In accordance with embodiments of the present invention, when the first terminal storing the time-series play data is mounted on and connected to the mounting base device, the time-series play data stored on the first terminal is output from the mounting base device. When the second terminal in a wireless communication with the information processing apparatus is mounted and connected to the mounting base device, the second terminal acquires the time-series play data stored from-the information processing apparatus in a wireless communication, and the time-series play data is then output from the mounting base device. The source of the time-series play data output from the mounting base device is changed by simply changing the terminal mounted on the mounting base device. In this way, the data output system and data output method in accordance with embodiments of the present invention thus output a great deal of data.

### BRIEF DESCRIPTION OF THE DRAWINGS

Fig. 1 illustrates a configuration of an audio system in accordance with a first embodiment of the present invention;
Figs. 2A and 2B illustrate a portable audio player connected with a cradle and a wireless communication mode connected with a cradle respectively in accordance with the first embodiment of the present invention;
Fig. 3 is a block diagram of the portable audio player in accordance with the first embodiment of the present invention;
Fig. 4 is a block diagram of the wireless communication module in accordance with the first embodiment of the present invention;
Fig. 5 is a block diagram of the cradle in accordance with the first embodiment of the present invention;
Fig. 6 is a block diagram of a server in accordance with the first embodiment of the present invention;
Fig. 7 illustrates the function of the wireless communication module with the portable audio player and the cradle interconnected to each other in accordance with the first embodiment of the present invention;
Fig. 8 is a flowchart illustrating a process of the portable audio player in accordance with the first embodiment of the present invention;
Fig. 9 is a flowchart illustrating a process of the wireless communication module in accordance with the first embodiment of the present invention;
Fig. 10 is a flowchart illustrating a process of the cradle in accordance with the first embodiment of the present invention;
Fig. 11 is a flowchart illustrating a process of the server in accordance with the first embodiment of the present invention;
Fig. 12 is a block diagram of a wireless communication module in accordance with a second embodiment of the present invention;
Fig. 13 is a flowchart illustrating a process of the wireless communication module in accordance with the second embodiment of the present invention;
Fig. 14 is a block diagram illustrating a wireless communication module in accordance with a third embodiment of the present invention;
Fig. 15 is a block diagram illustrating a portable audio player in accordance with a fourth embodiment of the present invention;
Fig. 16 is a block diagram illustrating a wireless communication module in accordance with the fourth embodiment of the present invention; and
Fig. 17 is a flowchart illustrating a process of a cradle in accordance with another embodiment of the present invention.

### DESCRIPTION OF THE PREFERRED EMBODIMENTS

The embodiments of the present invention are described below with reference to the drawings.

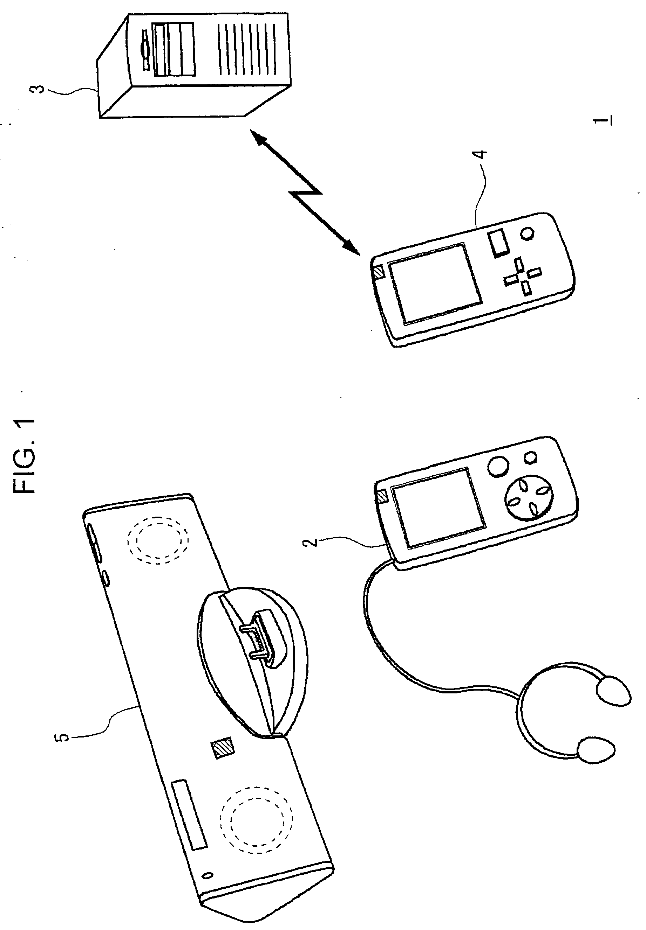

As shown in Fig. 1, an audio system 1 includes a portable audio player 2 for storing and reproducing audio data of music, a server 3 for storing the audio data of music, a wireless communication module 4, having an external view generally identical to that of the portable audio player 1, for communicating with the server 3, and a cradle 5 having a loudspeaker therewithin. When one of the portable audio player 2 and the wireless communication module 4 is mounted on the cradle 5, the cradle 5 is electrically connected to the one of the portable audio player 2 and the wireless communication module 4.

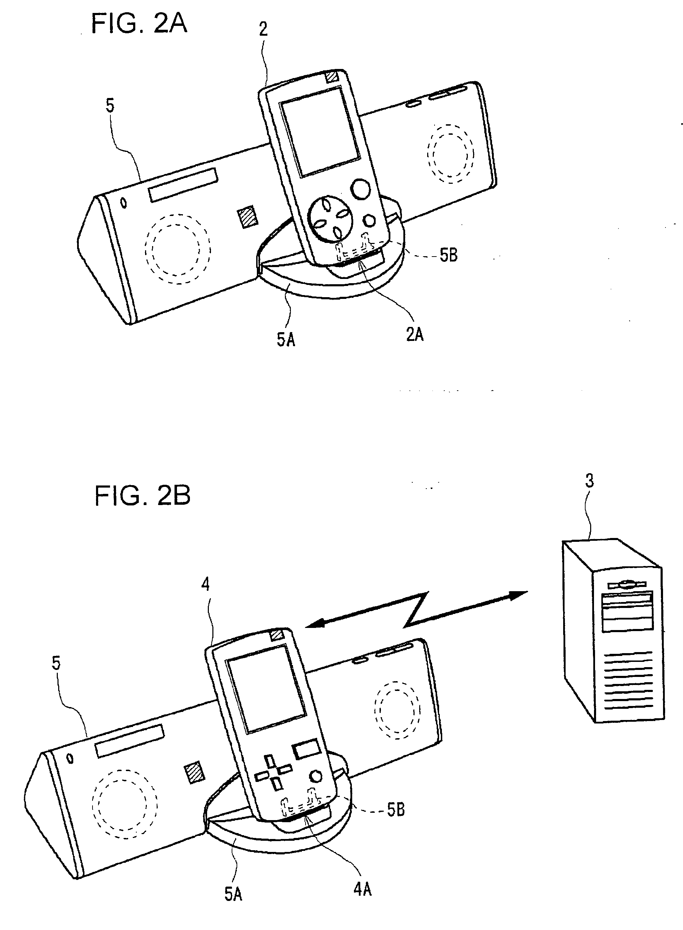

When one of the portable audio player 2 and the wireless communication module 4 is mounted on the cradle 5, a mounting base 5A arranged on a predetermined location of the cradle 5 receives one of the portable audio player 2 and the wireless communication module 4 at a predetermined alignment in an exclusive or selective manner as shown in Figs. 2A and 2B. The mounting base 5A is provided with a connection terminal 5B (also referred to as a cradle terminal). The portable audio player 2 and the wireless communication module 4 are also provided with contact faces 2A and 4A, respectively. The contact faces 2A and 4A have the connection terminals thereof (not shown). The connection terminal of the portable audio player 2 is referred to as a player terminal, and the contact terminal of the wireless communication module 4 is referred to as a module terminal.

When the portable audio player 2 is mounted on the mounting base 5A of the cradle 5, the player terminal is put into contact with the cradle terminal 5B, thereby causing the portable audio player 2 to be electrically connected to the cradle 5. Similarly, when the wireless communication module 4 is mounted on the mounting base 5A of the cradle 5, the module terminal is put into contact with the cradle 5, thereby causing the wireless communication module 4 to be electrically connected to the cradle 5.

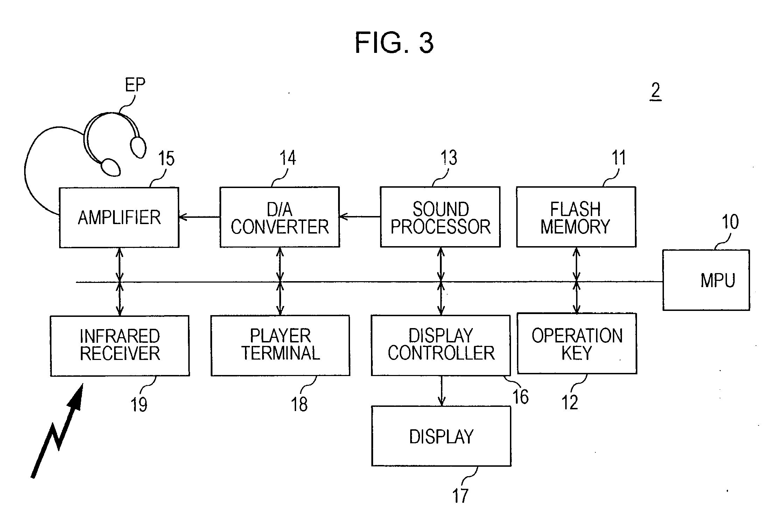

The circuit arrangement of the portable audio player 2, the server 3, the wireless communication module 4, and the cradle 5 is described below. With reference to Fig. 3, the portable audio player 2 is described. In the portable audio player 2, an microprocessor unit (MPU) 10 generally controls the portable audio player 2 under the control of a program read from one of a flash memory 11 and an internal memory in the MPU 10.

With the portable audio player 2 removed from the cradle 5, the MPU 10 in the portable audio player 2 may recognize a reproducing start operation to be performed on audio data stored on the flash memory 11 via an operation key 12. In response, the audio data is read from the flash memory 11, and then input to a sound processor 13. The audio data stored on the flash memory 11 is coded (compressed).

The sound processor 13 performs digital process, such as a decoding process, on the audio data, and supplies the digital processed audio data to an analog-to-digital (D/A) converter 14.

The D/A converter 14 performs a digital-to-analog conversion process on the audio data supplied from the sound processor 13, thereby obtaining an audio signal. The audio signal is then supplied to an amplifier 15. The amplifier 15 amplifies the audio signal, and then outputs a sound responsive to the audio signal from an earphone EP connected to an earphone terminal (not shown).

When the portable audio player 2 is carried by a user and is not connected to the cradle 5, the sound obtained by reproducing the audio data stored on the flash memory 11 is output from the earphone EP.

During playing of the audio data, the MPU 10 in the portable audio player 2 displays on a display 17 via a display controller 16 information incidental to the audio data (the title of a song, the name of an artist performing the song, the genre of the song, playback time, etc.) and a variety of other information relating to volume level, a remaining capacity of a battery, etc.

When the portable audio player 2 is mounted on the cradle 5, the internal battery (not shown) of the portable audio player 2 is charged by power supplied from the cradle 5 via the player terminal 18 connected to the cradle terminal 5B.

With the portable audio player 2 mounted on the cradle 5, the MPU 10 in the portable audio player 2 may recognize a reproducing start operation to be performed on audio data stored on the flash memory 11 via an operation key 12. The MPU 10 reads the audio data from the flash memory 11. The sound processor 13 and the D/A converter 14 perform the digital process and digital-to-analog process on the read audio data (the digital process and the digital-to-analog process are collectively referred to as a reproducing process). An audio signal thus results. The audio signal is then supplied to the cradle 5 via the player terminal 18. A sound responsive to the audio signal supplied to the cradle 5 is output from the loudspeaker arranged in the cradle 5.

When the portable audio player 2 is connected to the cradle 5, the sound obtained by reproducing the audio signal recorded on the flash memory 11 is output from the loudspeaker arranged in the cradle 5.

The portable audio player 2 further includes an infrared receiver 19. Upon receiving an infrared signal transmitted from a remote controller (not shown), the infrared receiver 19 converts the received signal into a command. The portable audio player 2 not only performs a variety of processes in response to an operation input entered to the operation key 12 but also performs a remote control operation by responding to an operation input entered to the remote controller.

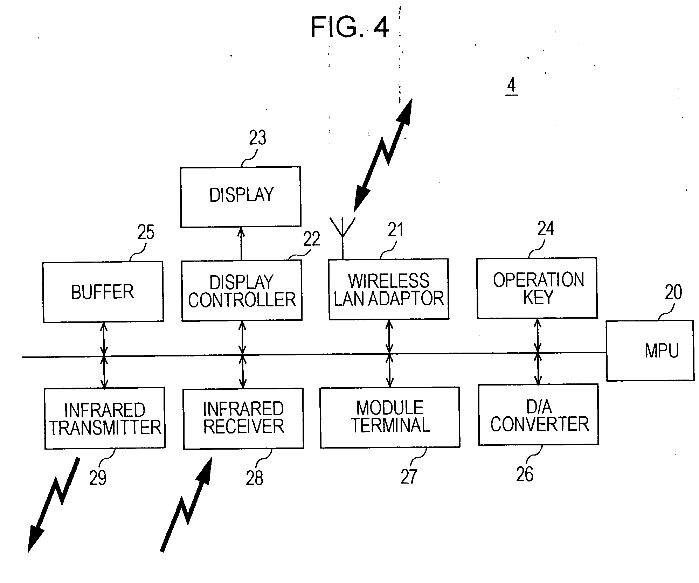

The circuit arrangement of the wireless communication module 4 is described below with reference to Fig. 4. For example, the wireless communication module 4 communicates with the server 3 in a wireless communication in accordance with wireless LAN standard such as IEEE (the Institute of Electrical and Electronics Engineers) 802.11 standard. An MPU 20 in the wireless communication module 4 executes a program read from an internal memory (not shown) thereof, thereby generally controlling the wireless communication module 4.

When the wireless communication module 4 is mounted on and connected to the cradle 5, the MPU 20 in the wireless communication module 4 transmits to the server 3 via a wireless LAN adaptor 21 a list request command requesting a list of audio data stored on the server 3. In response, the MPU 20 receives the list of the audio data transmitted from the server 3 via the wireless LAN adaptor 21, and displays the received list on the display 23 via a display controller 22. For example, the displayed list includes the title of a song corresponding to each piece of audio data stored on the server 3.

Upon displaying the list on the display 23, the MPU 20 recognizes a reproducing operation in which a user may select any audio data from the list of audio data using the operation key 24. The MPU 20 transmits to the server 3 via the wireless LAN adaptor 21 an audio data request signal requesting the selected audio data. When the server 3 starts transmitting the audio data, the MPU 20 receives the audio data via the wireless LAN adaptor 21, and writes a received portion of the audio data on a buffer 25. The audio data transmitted from the server 3 is linear pulse code modulated (PCM) data on which the server 3 has performed digital process such as decoding process.

When the audio data of several minutes is accumulated on the buffer 25, the MPU 20 transfers the accumulated audio data to a digital-to-analog (D/A) converter 26 while deleting the accumulated audio data from the buffer 25. The MPU 20 waits until audio data of several minutes is accumulated on the buffer 25. The D/A converter 26 performs an analog-to-digital conversion process on the incoming audio data, thereby outputting an audio signal. The audio signal is then supplied to the cradle 5 via a module terminal 27 connected to the cradle terminal 5B. A sound responsive to the audio signal supplied to the cradle 5 is output from the loudspeaker arranged in the cradle 5. In the discussion that follows, portions of the audio data are successively digital-to-analog converted in the order of reception, and this process is referred to as a stream reproducing process.

The wireless communication module 4, when connected to the cradle 5, stream reproduces the audio data transmitted from the server 3 into an audio signal, and outputs the sound responsive to the audio signal from the loudspeaker arranged in the cradle 5. The internal battery of the wireless communication module 4, when connected to the cradle 5, is charged by power supplied from the cradle 5 via the module terminal 27.

The wireless communication module 4 further includes an infrared receiver 28. The infrared receiver 28 receives an infrared signal transmitted from the remote controller (not shown), and converts the received signal into a command. The wireless communication module 4 not only performs a variety of processes in response to an operation input entered to the operation key 24 but also performs a remote control operation by responding to an operation input entered to the remote controller.

The wireless communication module 4 further includes an infrared transmitter 29. With the wireless communication module 4 removed from the cradle 5, the MPU 20 may recognize a command to the wireless communication module 4 input via the operation key 24. The infrared transmitter 29 converts the command into an infrared signal to transmit the infrared signal to the wireless communication module 4. More specifically, the wireless communication module 4, when removed from the cradle 5, functions as a remote controller of the portable audio player 2.

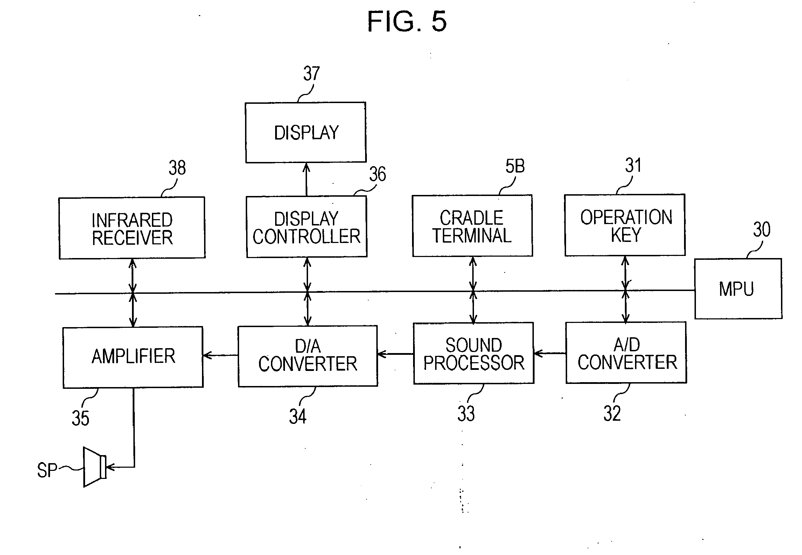

The circuit arrangement of the cradle 5 is described below with reference to Fig. 5. The cradle 5 operates from power supplied from an AC adaptor (not shown). An MPU 30 executes a program read from the internal memory thereof, thereby generally controlling the cradle 5.

When the user performs a power-on operation using an operation key 31, the entire cradle 5 is switched on. If one of the portable audio player 2 and the wireless communication module 4 is mounted on and connected to the mounting base 5A, power is supplied to the one of the portable audio player 2 and the wireless communication module 4 via the cradle terminal 5B.

The cradle 5 receives via the cradle terminal 5B an audio signal supplied from the portable audio player 2 or the wireless communication module 4 whichever is connected to the cradle 5. The MPU 30 in the cradle 5 inputs the audio signal to an analog-to-digital (A/D) converter 32.

The A/D converter 32 obtains audio data by analog-to-digital converting the audio signal, and supplies the audio data to a sound processor 33. The sound processor 33 performs digital process such as equalizing process on the audio data supplied from the A/D converter 32, and then supplies the processed audio data to a D/A converter 34.

The D/A converter 34 obtains an audio signal by digital-to-analog converting the audio data supplied from the sound processor 33, and then supplies the audio signal to an amplifier 35. After amplifying the audio signal, the amplifier 35 supplies the amplified signal to the loudspeaker SP connected to a loudspeaker terminal. A sound responsive to the amplified signal is thus output from the loudspeaker SP.

The cradle 5 thus charges the portable audio player 2 or the wireless communication module 4 whichever is connected to the cradle terminal 5B, and allows the sound responsive to the audio signal supplied from the portable audio player 2 or the wireless communication module 4 to be output from the loudspeaker SP.

The MPU 30 in the cradle 5 displays a variety of information including volume level and current time on the display 37 via a display controller 36.

The cradle 5 further includes an infrared receiver 38. The infrared receiver 38 receives and converts an infrared signal transmitted from a remote controller (not shown) into a command. More specifically, the cradle 5 not only performs a variety of processes in response to operations performed on the operation key 31 but also performs a remote control operation in response to operations performed on the remote controller.

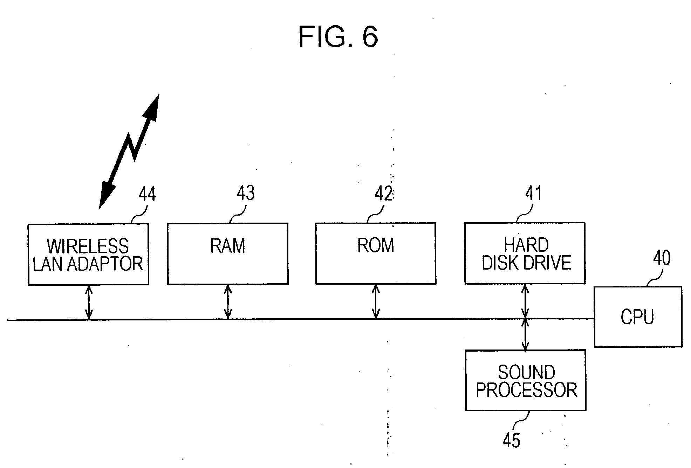

The circuit arrangement of the server 3 is described below with reference to Fig. 6. The server 3 communicates with the wireless communication module 4 in accordance with the wireless LAN communication standard with which the wireless communication module 4 also complies with in operation. A CPU 40 reads a program from one of a hard disk drive 41 and a read-only memory (ROM) 42 and expands the read program on a random-access memory (RAM) 43 for program execution. The CPU 40 generally control the server 3 for a variety of processes. The CPU 40 causes the RAM 43 to store data handled in the processes.

The CPU 40 receives from the wireless communication module 4 a list request signal requesting a list of audio data via a wireless LAN adaptor 44. In response to the list request signal, the CPU 40 transmits to the wireless communication module 4 a list of audio data stored on a hard disk drive 41 via the wireless LAN adaptor 44. The list, when generated, is stored on the hard disk drive 41.

After transmitting the list, the CPU 40 receives from the wireless communication module 4 via the wireless LAN adaptor 44 an audio data request signal requesting audio data. The CPU 40 reads from the hard disk drive 41 the audio data specified in the audio data request signal. The audio data recorded on the hard disk drive 41 is coded (compressed).

The CPU 40 performs digital process.such as decoding process on the read audio data using a sound processor 45, and then transmits to the wireless communication module 4 via the wireless LAN adaptor 44 the digital processed audio data. The audio data that is digital processed by the sound processor 45 is linear PCM data, and that linear PCM data is transmitted to the wireless communication module 4.

In response to the requests from the wireless communication module 4, the server 3 transmits to the wireless communication module 4 the list of audio data stored on the hard disk drive 41 and the audio data that has undergone the predetermined digital process.

Discussed below are the functions of the cradle 5, the portable audio player 2 and the wireless communication module 4 with the portable audio player 2 mounted on the mounting base 5A and connected to of the cradle 5. Also discussed are the functions of the cradle 5, the wireless communication module 4 and the server 3 with the wireless communication module 4 mounted on the mounting base 5A and connected to the cradle 5.

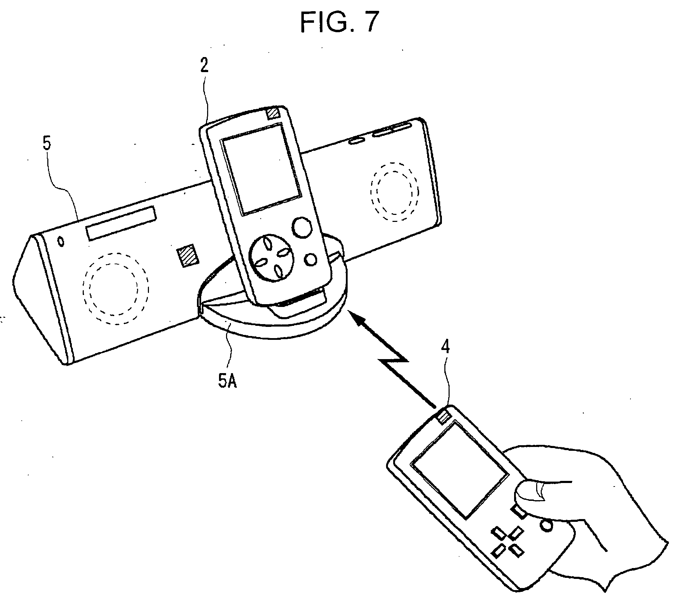

With the portable audio player 2 connected to the cradle 5 as shown in Fig. 7, the portable audio player 2 reads the audio data from the flash memory 11 in response to an operation performed on the operation key 12 or an infrared signal. By performing the reproducing process on the read audio data, the portable audio player 2 obtains an audio signal and then supplies the audio signal to the cradle 5. The cradle 5 outputs from a loudspeaker SP a sound responsive to the audio signal transmitted from the portable audio player 2 while charging the portable audio player 2. The wireless communication module 4 transmits an infrared signal to the portable audio player 2 in response to an operation performed on the operation key 24.

When the portable audio player 2 is connected to the cradle 5, the function of the portable audio player 2 is to perform the reproducing process on the audio data read from the flash memory 11. Furthermore, the function of the cradle 5 is to output the sound responsive to the audio data reproduced by the portable audio player 2, and to charge the portable audio player 2, and the function of the wireless communication module 4 is to remote control the portable audio player 2.

With the wireless communication module 4 mounted on the mounting base 5A and connected to the cradle 5 as shown in Fig. 2B, the wireless communication module 4 receives audio data from the server 3 in response to an operation performed on the operation key 24 or a received infrared signal. The wireless communication module 4 performs stream reproducing process on the received audio data to obtain an audio signal and then supplies the audio signal to the cradle 5. The cradle 5 outputs from the loudspeaker SP a sound responsive to the audio signal transmitted from the wireless communication module 4 while charging the wireless communication module 4. In response to the request from the wireless communication module 4, the server 3 transmits to the wireless communication module 4 the audio data that has undergone the digital process such as the decoding process.

With the wireless communication module 4 connected to the cradle 5, the function of the wireless communication module 4 is to receive the audio data from the server 3 in a wireless communication, and to perform the stream reproducing process on the received audio data. Furthermore, the function of the cradle 5 is to output the sound responsive to the audio data on which the wireless communication module 4 has performed the stream reproducing process, and to charge the wireless communication module 4. The function of the server 3 is to supply the audio data to the wireless communication module 4 in a wireless communication.

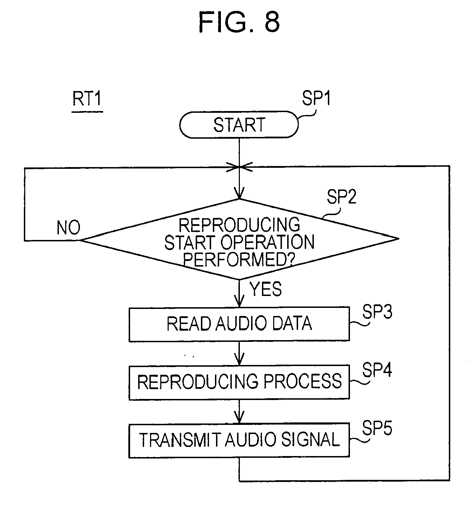

The procedure of the process of each of the portable audio player 2, the wireless communication module 4, the cradle 5 and the server-3 3 is described below. With reference to a flowchart of Fig. 8, a process procedure RT1 of the portable audio player 2 is described below. The process procedure RT1 of the portable audio player 2 is performed under the control of the program that the MPU 10 in the portable audio player 2 has read from one of the flash memory 11 and the internal memory (not shown) of MPU 10.

When the portable audio player 2 is switched on, the MPU 10 in the portable audio player 2 starts the process procedure RT1 with step SP1, and then proceeds to step SP2. In step SP2, the MPU 10 waits on standby until the reproducing operation is performed on the audio data stored on the flash memory 11. Upon determining that no reproducing operation is performed, the MPU 10 proceeds to step SP3.

In step SP3, the MPU 10 reads from the flash memory 11 the audio data specified in the reproducing operation, and then proceeds to step SP4. In step SP4, the MPU 10 performs the reproducing process on the read audio data using the sound processor 13 and the D/A converter 14, thereby obtaining the audio signal. Processing proceeds to step SP5.

In step SP5, the MPU 10 supplies the audio signal obtained in step SP4 to each of the amplifier 15 and the player terminal 18. If an earphone EP is connected to an earphone terminal of-the amplifier 15, the audio signal amplified by the amplifier 15 is supplied to the earphone EP. A sound responsive to the audio signal is thus output from the earphone EP. If the cradle terminal 5B is connected to the player terminal 18, i.e., if the portable audio player 2 is connected to the cradle 5, the audio signal is output from the player terminal 18 to the cradle 5. A sound responsive to the audio signal is output from the loudspeaker SP of the cradle 5. After outputting the audio signal in this way, the MPU 10 returns to step SP2 to wait on standby for a reproducing operation.

In accordance with the process procedure RT1, the portable audio player 2 reproduces the audio data read from the flash memory 11, and then outputs the resulting sound from one of the earphone EP and the loudspeaker SP of the cradle 5.

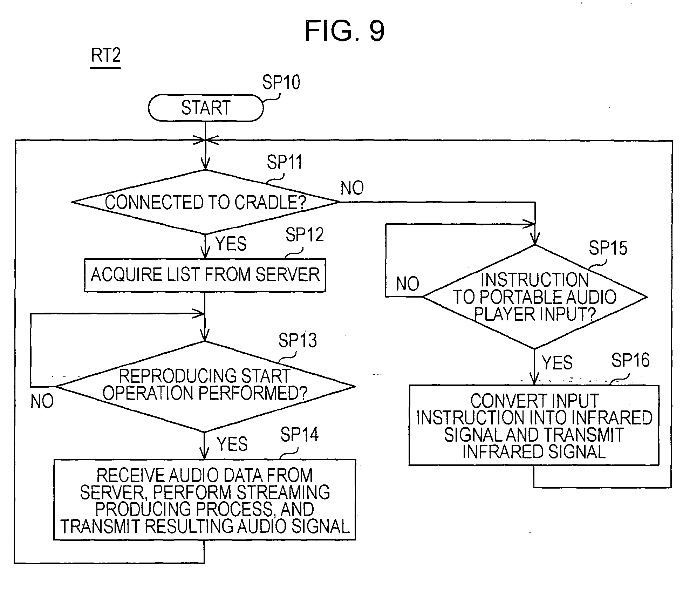

A process procedure RT2 of the wireless communication module 4 is described below with reference to a flowchart of Fig. 9. The process procedure RT2 of the wireless communication module 4 is performed under the control of the program that the MPU 20 in the wireless communication module 4 has read from the internal memory (not shown) of the MPU 20.

When the wireless communication module 4 is switched on, the MPU 20 in the wireless communication module 4 starts the process procedure RT2 with step SP10, and proceeds to step SP11. In step SP11, the MPU 20 determines whether the wireless communication module 4 is connected to the cradle 5. The MPU 20 determines whether the wireless communication module 4 is connected to the cradle 5 by detecting a change in voltage level of the module terminal 27.

If an affirmative answer is obtained in step SP11, the MPU 20 recognizes that the wireless communication module 4 is connected to the cradle 5, and proceeds to step SP12. In step SP12, the MPU 20 obtains a list of audio data from the server 3 by requesting the list from the server 3. The MPU 20 displays the acquired list on the display 23 and then proceeds to step S13.

In step S13, the MPU 20 waits on standby until the user performs the reproducing operation by selecting any audio data on the list using the operation key 24. Upon recognizing the reproducing operation, processing proceeds to step SP14. In step SP14, the MPU 20 acquires the audio data from the server 3 by requesting the audio data selected in step SP13 from the server 3. The MPU 20 obtains an audio signal by performing the stream reproducing process on the received audio data, and supplies the resulting audio signal to the module terminal 27. The audio signal is then supplied from the module terminal 27 to the cradle 5, and a sound responsive to the audio signal is output from the loudspeaker SP of the cradle 5. After outputting the audio signal, the MPU 20 returns to step SP11 to determine whether the wireless communication module 4 is connected to the cradle 5.

When the wireless communication module 4 is removed from the cradle 5, the MPU 20 obtains a non-affirmative result in step SP11, and proceeds to step SP15. In step SP15, the MPU 20 waits on standby for a command that is input to the portable audio player 2 via the portable audio player 2. Upon recognizing the input command, the MPU 20 proceeds to step SP16.

In step SP16, the MPU 20 converts the input command into an infrared signal using the infrared transmitter 29, and then transmits the infrared signal to the portable audio player 2. The MPU 20 then again returns to step SP11 to determine whether the wireless communication module 4 is connected to the cradle 5.

In accordance with the process procedure RT2, the wireless communication module 4, when connected to the cradle 5, performs the stream reproducing process on the audio data received from the server 3, and outputs the resulting sound from the loudspeaker SP of the cradle 5. If the wireless communication module 4 is not connected to the cradle 5, the wireless communication module 4 serves as a remote controller of the portable audio player 2.

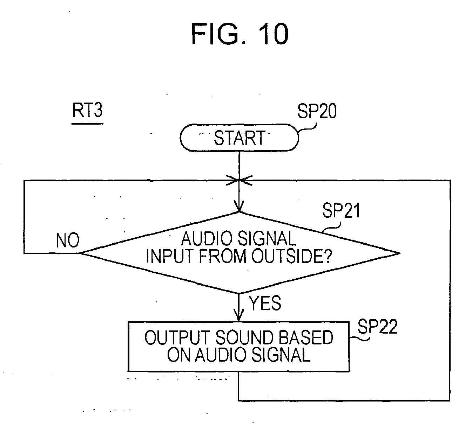

A process procedure RT3 of the cradle 5 is described below with reference to a flowchart of Fig. 10. The process procedure RT3 of the cradle 5 is performed under the control of the program that-the MPU 30 of the cradle 5 has read from the internal memory (not shown) of the MPU 30.

The MPU 30 in the cradle 5 starts the process procedure RT3 with step SP20 and then proceeds to step SP21. In step SP21, the MPU 30 waits on standby for an input of an audio signal from the outside via the cradle terminal 5B (namely, from one of the portable audio player 2 and the wireless communication module 4). Upon recognizing the input of the audio signal, the MPU 30 proceeds to step SP22.

In step SP22, the MPU 30 performs the equalizing process and amplification process on the input audio signal to obtain an output audio signal using the A/D converter 32, the sound processor 33, the D/A converter 34, and the amplifier 35, and outputs a sound responsive the output audio signal from the loudspeaker SP. The MPU 30 then returns to step SP21 to wait on standby for an input of audio signal.

In accordance with the process procedure RT3, the cradle 5 outputs from the loudspeaker SP the sound responsive to the audio signal input from one of the portable audio player 2 and the wireless communication module 4.

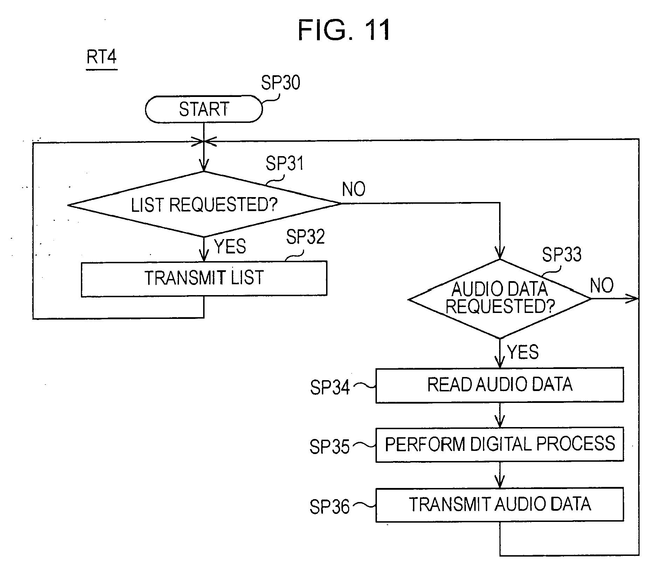

A process procedure RT4 of the server 3 is described below with reference to a flowchart of Fig. 11. The process procedure RT4 of the server 3 is performed under the control of the program that the CPU 40 of the server 3 has read from one of the hard disk drive 41 and the CPU 40.

When the server 3 is switched on, the CPU 40 in the server 3 starts the process procedure RT4 with step SP30, and then proceeds to step SP31. In step SP31, the CPU 40 determines whether the wireless communication module 4 has requested the list of audio data. If an affirmative answer is obtained in step SP31, the list request signal has been received from the wireless communication module 4. The CPU 40 proceeds to step SP32. In step SP32, the CPU 40 transmits the list to the wireless communication module 4 and then returns again to step SP31.

A non-affirmative result obtained in step SP31 shows that the list request signal has not been received. The CPU 40 proceeds to step SP33. In step SP33, the CPU 40 determines whether the wireless communication module 4 has requested the audio data.

If a non-affirmative answer is obtained in step SP33, the CPU 40 returns again to step SP31. The non-affirmative result shows that neither the list request signal nor the audio request signal has been received. If an affirmative answer is obtained in step SP33, the CPU 40 proceeds to step SP34. The affirmative result in step SP33 shows that the audio data request signal transmitted from the wireless communication module 4 has been received.

In step SP34, the CPU 40 reads from the hard disk drive 41 the audio data specified by the audio data request signal, and then proceeds to step SP35. In step S35, the CPU 40 performs digital process such as decoding process on the read audio data using the sound processor 45, and then proceeds to step SP36. In step SP36, the CPU 40 transmits to the wireless communication module 4 the audio data that has undergone the digital process and then returns to step SP31 again.

In accordance with the process procedure RT4, the server 3 transmits the list of audio data or the audio data to the wireless communication module 4 in a wireless communication in response to the request from the wireless communication module 4.

When the portable audio player 2 is mounted on the mounting base 5A of the cradle 5 in the audio system 1, the portable audio player 2 is connected to the cradle 5. When the wireless communication module 4 is mounted on the mounting base 5A of the mounting base 5A in the audio system 1, the wireless communication module 4 is connected to the cradle 5.

The portable audio player 2, when connected to the cradle -5, reproduces the audio data stored on the flash memory 11 thereof in the audio system 1. The portable audio player 2 then outputs the resulting audio signal to the cradle 5, thereby outputting the sound responsive to the audio signal from the loudspeaker SP of the cradle 5.

The wireless communication module 4, when connected to the cradle 5, receives the audio data stored on the server 3 in a wireless communication and stream reproduces the audio data in the audio system 1. The wireless communication module 4 outputs the resulting audio signal to the cradle 5, thereby outputting the sound responsive to the audio signal from the loudspeaker SP of the cradle 5.

In this way, with the portable audio player 2 mounted on the cradle 5 in the audio system 1, the cradle 5 outputs the sound responsive to the audio data read from the portable audio player 2. With the wireless communication module 4 mounted on the cradle 5 in the audio system 1, the cradle 5 outputs the sound responsive to the audio data received by the wireless communication module 4 from the server 3. The source of sound (song, for example) to be output from the cradle 5 is changed by changing simply the device mounted on the cradle 5 (the portable audio player 2 or the wireless communication module 4).

The wireless communication module 4, when removed from the cradle 5, functions as a remote controller of the portable-audio player 2 in the audio system 1. Even when the wire-less communication module 4 is not connected to the cradle 5 in the audio system 1, the wireless communication module 4 can be used as a remote controller of the portable audio player 2. This arrangement conveniently eliminates the need for a remote controller of the portable audio player 2.

The wireless communication module 4 is generally identical in external view to the portable audio player 2. When the wireless communication module 4 is used as a remote controller of the portable audio player 2, the user can operate the wireless communication module 4 generally in the same way as the user uses the portable audio player 2.

When the portable audio player 2 is mounted on and connected to the cradle 5 in the audio system 1 in this way, the sound responsive to the audio data stored on the portable audio player 2 is output from the loudspeaker SP of the cradle 5. When the wireless communication module 4 is mounted on and connected to the cradle 5, the wireless communication module 4 acquires the audio data from the server 3 in a wireless communication and converts the audio data into the sound so that the sound is output from the loudspeaker SP of the cradle 5. By simply changing the device (such as the portable audio player 2 and the wireless communication module 4) mounted on the cradle 5, the source of the audio data to be output from the cradle 5 is changed. Much more data can thus output.

In accordance with the first embodiment, the portable audio player 2 reproduces the audio data into the audio signal, and then outputs the audio signal to each of the amplifier 15 and the player terminal 18. The present invention is not limited to this arrangement. When the portable audio player 2 is not connected to the cradle 5, the audio signal is sent to the amplifier 15. The sound responsive to the audio data is output from the earphone EP connected to the earphone terminal of the amplifier 15. When the portable audio player 2 is connected to the cradle 5, the audio signal is sent to the player terminal 18 so that the sound responsive to the audio data is output from the loudspeaker SP of the cradle 5. A variation in the voltage level is detected to determine whether or not the portable audio player 2 is connected to the cradle 5.

In the first embodiment, the variation in the voltage level of the module terminal 27 is detected to determine the connection of the wireless communication module 4 to the cradle 5. The present invention is not limited to this arrangement. A switch may be arranged on the contact face 4A of the wireless communication module 4. When the wireless communication module 4 is mounted on the mounting base 5A of the cradle 5, the wireless communication module 4 turns on the switch with the weight thereof, and thus determines that the connection between the wireless communication module 4 and the cradle 5 is established. When power is supplied from the outside via the module terminal 27, the connection between the wireless communication module 4 and the cradle 5 is determined to be established. Any other method is also acceptable as long as that method determines whether the connection between the wireless communication module 4 and the cradle 5 is established.

A second embodiment of the present invention is described below. The second embodiment is generally identical to the first embodiment except that the wireless communication module 4 alone can output a sound. The portable audio player 2, the cradle 5 and the server 3 remain unchanged from the counterparts in the first embodiment and are not described herein.

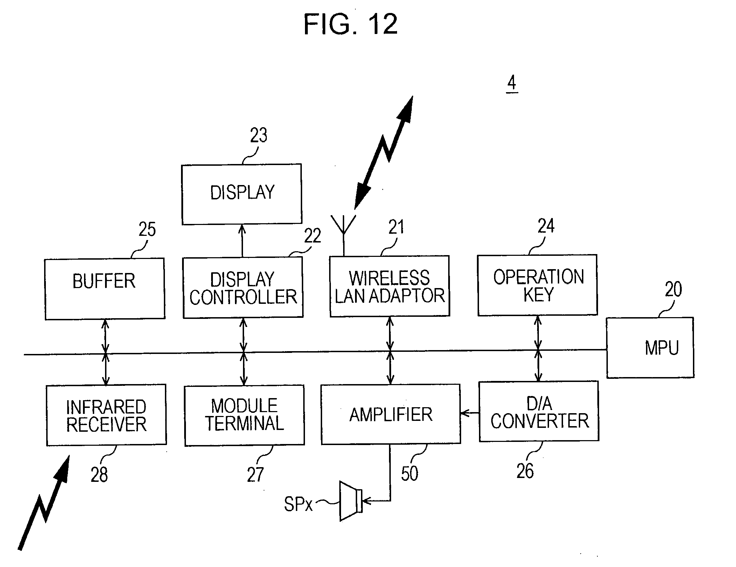

The structure of the wireless communication module 4 in accordance with the second embodiment of the present invention is described below with reference to Fig. 12. The wireless communication module 4 communicates with the server 3 in accordance with wireless LAN standard such as the IEEE 802.11 as in the first embodiment. The MPU 20 executes a program read from the internal memory thereof (not shown), thereby generally controlling the wireless communication module 4.

Regardless of whether the wireless communication module 4 is connected to the cradle 5, the MPU 20 in the wireless communication module 4 recognizes that the user has operated the operation key 24 to acquire the list of audio data stored on the server 3 and transmits to the server 3 via the wireless LAN adaptor 21 the list request signal requesting the list of audio data. In response, the MPU 20 receives from the server 3 via the wireless LAN adaptor 21 the list of audio data. Upon receiving the list, the MPU 20 displays the received list on the display 23 via the display controller 22.

The list stored on the server 3 includes an identifier identifying the audio data, and information for each audio data mapping the audio data to a song title (hereinafter referred to as audio data information). Available as such a list are a list listing audio data information arranged in a predetermined order (for example, song tiles alphabetically arranged) corresponding the audio data stored.on the server 3 (hereinafter referred to as a data list) and a list of audio data information of any audio data selected from the audio data stored on the server 3 and arranged in the order of play (hereinafter referred to as a play list). The server 3 may store a plurality of play lists or the server 3 may store no play lists at all.

The wireless communication module 4 recognizes the list stored on the server 3 by accessing the server 3.. The user may be allowed to select any of the lists stored on the server 3 using the operation key 24. More specifically, the MPU 20 acquires from the server 3 the list specified by the operation key 24, and causes the display 23 to display the acquired list.

After displaying the list on the display 23, the MPU 20 recognizes the reproducing process in which the user has selected any of the audio data of the list using the operation key 24. The MPU 20 receives the audio data via the wireless LAN adaptor 21 and writes the received audio data onto the buffer 25 in the order of data reception. The audio data transmitted from the server 3 is linear PCM modulated data.

When the audio data of several minutes is accumulated on the buffer 25, the MPU 20 transfers the accumulated audio data to the digital-to-analog (D/A) converter 26 while deleting the accumulated audio data from the buffer 25. The MPU 20 waits until audio data of several minutes is accumulated on the buffer 25. The D/A converter 26 performs an analog-to-digital conversion process on the incoming audio data, thereby outputting an audio signal. Under the control of the MPU 20, the audio signal is supplied to one of an amplifier 50 and the module terminal 27.

When the wireless communication module 4 is carried by the user instead of being connected to the cradle 5, the MPU 20 transfers the audio signal obtained from the D/A converter 26 to the amplifier 50. The audios signal, amplified by the amplifier 50 is output to a loudspeaker SPx. A sound responsive to the audio data is output from the loudspeaker SPx. The loudspeaker SPx is smaller than the loudspeaker SP housed in the cradle 5 although the size of the loudspeaker SPx also depends on the size of the wireless communication module 4.

When the wireless communication module 4 is connected to the cradle 5, the MPU 20 supplies the audio signal from the D/A converter 26 to the module terminal 27. As a result, the audio signal is output to the cradle 5 via the module terminal 27, and the sound responsive to the audio data is output from the loudspeaker SP of the cradle 5. The loudspeaker SP, larger than the loudspeaker SPx housed in the wireless communication module 4, provides a high-quality audio sound outperforming in low-frequency sound the sound of the loudspeaker SPx.

The acquired list may be a play list. When the stream reproducing process of the audio data selected from the play list is completed, the MPU 20 automatically acquires next audio data from the server 3 in accordance with the play list and performs the stream reproducing process on the next audio data.

The wireless communication module 4, when unconnected to the cradle 5, performs the stream reproducing process on the audio data transmitted from the server 3 in a wireless communication to obtain the sound, and outputs the resulting sound from the loudspeaker SPx housed therewithin. The wireless communication module 4, when connected to the cradle 5, performs the stream reproducing process on the audio data transmitted from the server 3 in a wireless communication to obtain the sound, and outputs the resulting sound from the loudspeaker SP of the cradle 5 at a high sound quality.

The wireless communication module 4 may be connected to the cradle 5 in the middle of the stream reproducing process thereof performed on the audio data received from the server 3, i.e., in the middle of outputting the sound responsive to the audio data received from the server 3 from the loudspeaker SPx. In such a case, the reception of the audio data is suspended. The wireless communication module 4 then starts to receive the audio data again from the leading portion thereof and performs the stream reproducing process. The wireless communication module 4 sends the resulting audio signal to the cradle 5. The sound, which was output from the loudspeaker SPx and suspended, is now output from the loudspeaker SP of the cradle 5 at a higher sound quality.

An operational procedure of the wireless communication module 4 in accordance with the second embodiment of the present invention is described below. The MPU 20 in the wireless communication module 4 performs the operational procedure of the wireless communication module 4 under the control of the program read from the internal memory (not shown) of the MPU 20.

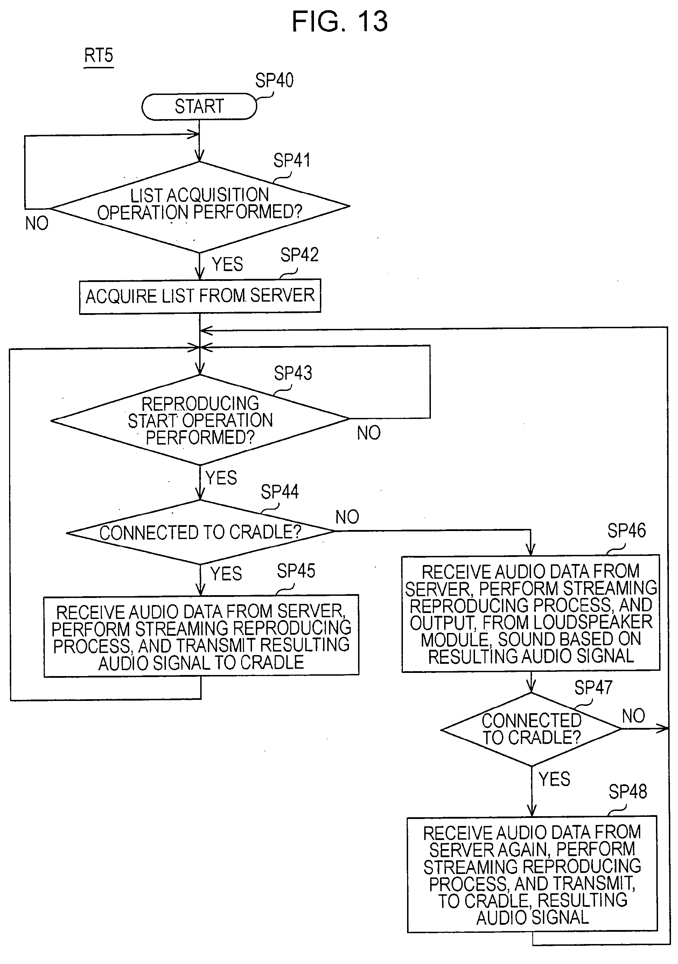

With reference to a flowchart of Fig. 13, the MPU 20 in the wireless communication module 4 starts the process procedure RT4 with step SP40 in response to the start of the wireless communication module 4. The MPU 20 proceeds to step SP41. In step SP41, the MPU 20 waits until the user performs a list acquisition operation by specifying any of the lists stored on the server 3 with the operation key 24. Upon recognizing the list acquisition operation, the MPU 20 proceeds to step SP42.

In step SP42, the MPU 20 acquires the list from the server 3 by requesting the list specified in step S41 from the server 3. The MPU 20 displays the acquired list on the display 23 and processing proceeds to step SP43. In step SP43, the MPU 20 waits until the user performs a reproducing operation by selecting any order data from among the audio data listed in the list with the operation key 24. Upon recognizing the reproducing operation, the MPU 20 proceeds to step SP44.

In step SP44, the MPU 20 determines whether the wireless communication module 4 is connected to the cradle 5. If an affirmative answer is obtained in the determination step SP44, the MPU 20 recognizes that the wireless communication module 4 is connected to the cradle 5 and then proceeds to step SP45.

In step SP45, the MPU 20 receives the audio data from the server 3 by requesting the audio data selected in step SP43 from the server 3. The MPU 30 performs the stream reproducing process on the received audio data to obtain an audio signal and supplies the audio signal to the module terminal 27. The audio signal is thus output to the cradle 5 via the module terminal 27, and the sound responsive to the audio data is output from the loudspeaker SP of the cradle 5. Upon completing the stream reproducing process on the audio data, the MPU 20 returns to step SP43 to wait on standby for a reproducing operation.

If a non-affirmative answer is obtained in the determination step SP44, the MPU 20 determines that the wireless communication module 4 is unconnected to the cradle 5, and processing proceeds to step SP46. In step SP46, the MPU 20 receives the audio data from the server 3 by requesting the audio data selected in step SP43 from the server 3. The MPU 20 obtains the audio signal by performing the stream reproducing process on the received audio data, and transfers the audio signal to the amplifier 50. The audio signal amplified by the cradle 5 is transferred to the loudspeaker SPx so that the sound responsive to the audio data is output from the loudspeaker SPx.

After starting the stream reproducing process to output the sound, the MPU 20 proceeds to step SP47. In step SP47, the MPU 20 determines whether the wireless communication module 4 is connected to the cradle 5 in the middle of the stream reproducing process of the currently received audio data, i.e., in the middle of the outputting of the sound responsive to the audio data from the loudspeaker SPx. If a non-affirmative answer is obtained in step SP47, the MPU 20 returns again to step SP43 to wait-for a reproducing process.

If an affirmative answer is obtained in step SP47, the MPU 20 determines that the wireless communication module 4 is connected to the cradle 5 in the middle of outputting of the currently received audio data from the loudspeaker SPx, and processing proceeds to step SP48. In step SP48, the MPU 20 suspends the reception of the currently received audio data and receives the same audio data again from the leading portion thereof again, and performs the stream reproducing process. The resulting sound is output to the cradle 5. The sound, which was output from the loudspeaker SPx, is now output from the loudspeaker SP of the cradle 5. The MPU 20 returns to step SP43 to wait for a reproducing process.

If the acquired list is a play list, the MPU 20 may obtain an affirmative answer in step S43 after the stream reproducing process of the audio data in each of steps S45, S46, and S48. Based on the play list, the MPU 20 automatically obtains next audio data and performs the stream reproducing process on the next audio data.

In accordance with the process procedure RT5, the wireless communication module 4, when unconnected to the cradle 5, outputs from the loudspeaker SPx thereof the sound that is obtained by stream reproducing the audio data received from the server 3. The wireless communication module 4, when connected to the cradle 5, outputs from the loudspeaker SP of the cradle 5 the sound that is obtained by stream reproducing the audio data received from the server 3.

In the audio system 1 of the second embodiment of the present invention, the wireless communication module 4, when unconnected to the cradle 5, stream reproduces the audio data received from the server 3 and outputs the resulting sound from the loudspeaker SPx thereof.

In the audio system 1, the wireless communication module 4 is not connected to the cradle 5 when the portable audio player 2 is charged on the cradle 5. In such a case, the wireless communication module 4 alone can still output the sound responsive to the audio data received from the server 3. As a result, the user can enjoy the sound (such as a song) responsive to the audio data stored on one of the portable audio player 2 and the server 3.

In the audio system 1, the wireless communication module 4 may be connected to the cradle 5 in the middle of the outputting of the sound responsive to the audio data from the loudspeaker SPx. If the wireless communication module 4 is connected to the cradle 5, the reception of the audio data is suspended. In succession, the reception of the same audio data is restarted again from the leading portion thereof and the stream reproducing process is performed on the received audio data to obtain the audio signal. The sound, which was output from the loudspeaker SPx, is now output from the loudspeaker SP of the cradle 5 larger than the loudspeaker SPx from the leading portion of the sound.

The user can listen to the audio data stored on the server 3 by outputting the sound from the loudspeaker SPx of the wireless communication module 4 in the audio system 1. If the user likes any sound (any song, for example), the user can place the wireless communication module 4 on the cradle 5 while that sound is output from the loudspeaker SPx of the wireless communication module 4. The user can thus enjoy the sound output from the loudspeaker SP of the cradle 5 at a higher sound quality, i.e., the sound responsive to the audio data stored on the server 3.

The user can select the list and the audio data stored on the server 3 using the operation key 24 on the wireless communication module 4 in the audio system 1. The wireless communication module 4 can thus be used as a remote controller of the server 3.

In accordance with the second embodiment, the reception of the audio data is suspended when the wireless communication module 4 is connected to the cradle 5 in the middle of outputting the sound responsive to the audio data received from the server 3 from the loudspeaker SPx. The stream reproducing process is then performed by resuming the reception of the audio data from the leading portion thereof. The present invention is not limited to this method. For example, when the wireless communication module 4 is connected to the cradle 5 in the middle of outputting the sound responsive to the audio data received from the server 3 from the loudspeaker SPx, the reception of the audio data is suspended. After predetermined period of time (for example, after a few seconds), the stream reproducing process is performed by resuming the reception of the audio data from the leading portion thereof.

In this way, a predetermined period of time delay is arranged from the connection of the wireless communication module 4 to the cradle 5 to the outputting of the sound from the loudspeaker SP of the cradle 5. As a result, a sufficient time is permitted for the user to reach an appropriate listening point for the loudspeaker SP of the cradle 5 after the wireless communication module 4 is mounted on the cradle 5. The predetermined period of time delay may be predetermined or manually set by the user.

In accordance with the second embodiment, the sound that is obtained by performing the stream reproducing process on the audio data received from the server 3 is output from the loudspeaker SPx of the wireless communication module 4 when the wireless communication module 4 is unconnected to the cradle 5. The present invention is not limited to this arrangement. When the wireless communication module 4 is unconnected to the cradle 5, the audio signal that is obtained by performing the stream reproducing process on the audio data received from the server 3 may be converted into an infrared signal to be transmitted to the portable audio player 2 connected to the cradle 5. The portable audio player 2 converts the received infrared signal into an audio signal and supplies the audio signal to the cradle 5. The sound responsive to the audio data is thus output from the loudspeaker SP of the cradle 5.

Even when the wireless communication module 4 is unconnected to the cradle 5 in the audio system 1, the sound that is obtained by performing the stream reproducing process on the audio data received from the server 3 is output from the loudspeaker SP of the cradle 5.

Furthermore, the wireless communication module 4 may be connected to the cradle 5 after the audio data is reproduced on the wireless communication module 4. In such a case, the sound that is obtained by performing the stream reproducing process on the audio data is output from the loudspeaker SP of the cradle 5. If the wireless communication module 4 remains unconnected to the cradle 5 after the audio data is reproduced on the cradle 5, the sound that is obtained by performing the stream reproducing process on the audio data is output from the loudspeaker SPx of the wireless communication module 4. The present invention is not limited to this method. If the wireless communication module 4 is connected to the cradle 5 after the audio data is reproduced on the wireless communication module 4, the wireless communication module 4 starts the stream reproducing process on the audio data. The sound responsive to the audio signal is output from the loudspeaker SP of the cradle 5. On the other hand, if the wireless communication module 4 remains unconnected to the cradle 5, the MPU 20 waits until the wireless communication module 4 is reconnected to the cradle 5. Upon being connected to the cradle 5, the wireless communication module 4 starts the stream reproducing process and outputs the sound responsive to the resulting audio signal from the loudspeaker SP of the cradle 5.

In accordance with the second embodiment, the list of audio data stored on the server 3 lists the audio data information that maps the identifier identifying each audio data to the song title corresponding to the audio data. The present invention is not limited to this arrangement. For example, information relating to compression (encoding) method or bit rate may be contained in the audio data information of the list. Furthermore, the list may be arranged in any format.

A third embodiment of the present invention is described below. The third embodiment is substantially identical to the first embodiment except that the wireless communication module 4 includes a flash memory 60 storing a plurality of lists and that a plurality of servers 3 is present. The discussion of the portable audio player 2, the cradle 5, and the server 3, each remaining unchanged from the counterpart in the first embodiment, is omitted herein.

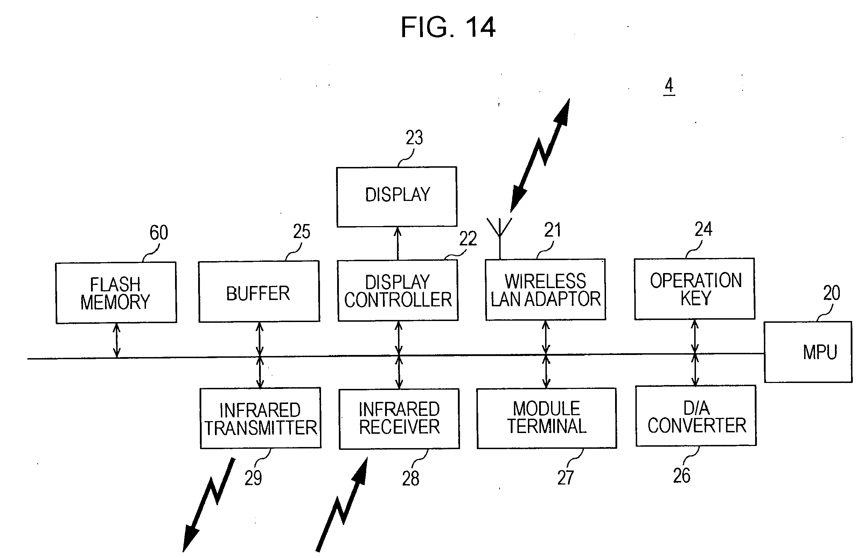

The structure of the wireless communication module 4 of the third embodiment of the present invention is described below with reference to Fig. 14. The wireless communication module 4 is designed to communicate with the plurality of servers 3 in a wireless communication in accordance with the wireless LAN standard such as IEEE802.11 standard. The MPU 20 generally controls the wireless communication module 4 by executing the program read-from the internal memory (not shown) thereof.

When the wireless communication module 4 is connected to the mounting base 5A of the cradle 5, the MPU 20 in the wireless communication module 4 transmits to each of the plurality of servers 3 a list request signal requesting a list stored on the server 3. The MPU 20 receives the list from each server 3 via the wireless LAN adaptor 21, and stores the received list on the flash memory 60.

The list stored by each server 3 lists audio data information mapping a server identifier identifying the server 3, an audio data identifier identifying the audio data, and a title of song corresponding to the audio data. The lists include two types of list, namely, a data list and a play list. A plurality of play lists may be stored on the server 3 or no play lists at all may be stored on the server 3.

The MPU 20 stores a plurality of lists received from the server 3 on the flash memory 60. The user may select any one of the lists stored on the flash memory 60 using the operation key 24. Upon recognizing the selected list, the MPU 20 displays the selected on the display 23 via the display controller 22.

The user may select any desired audio data from the audio data information in the list using the operation key 24. Upon recognizing the selected audio data information in the list, the MPU 20 transmits, to the server 3 identified by the server identifier contained in the selected audio data information, an audio data request signal via the operation key 31. The audio data request signal requests the audio data corresponding to the audio data identifier contained in the selected audio data information. When the server 3 starts to transmit the audio data, the MPU 20 stores the audio data in the order of reception as the audio data is received via the wireless LAN adaptor 21. The audio data transmitted from the server 3 is linear PCM modulated data.

When the audio data of several minutes is accumulated on the buffer 25, the MPU 20 transfers the accumulated audio data to the digital-to-analog (D/A) converter 26 while deleting the accumulated audio data from the buffer 25. The MPU 20 waits until audio data of several minutes is again accumulated on the buffer 25. The D/A converter 26 performs an analog-to-digital conversion process on the incoming audio data, thereby outputting an audio signal. Under the control of the MPU 20, the audio signal is supplied to one of an amplifier 50 and the module terminal 27.

The wireless communication module 4, when connected to the cradle 5, stream reproduces the audio data transmitted from the server 3 into an audio signal, and outputs the sound responsive to the audio signal from the loudspeaker arranged in the cradle 5.

The selected list may be a play list. When the stream reproducing process has been completed on the audio data selected from the play list, the MPU 20 automatically acquire next audio data from the server 3 and performs the stream reproducing process.

In the audio system 1 of the third embodiment of the present invention, the wireless communication module 4, when connected to the cradle 5, acquires the list from each of the plurality of servers 3 and stores the plurality of lists on the flash memory 60.

Any audio data information is selected from the audio data information listed in the plurality of lists stored on the flash memory 60 using the operation key 24. The wireless communication module 4 requests, from the server 3 identified by the server identifier contained in the selected audio data information, the audio data identified by the audio data identifier contained in the selected audio data information. The wireless communication module 4 receives the audio data, and performs the stream reproducing process on the received audio data to obtain the audio signal. The wireless communication module 4 then outputs the resulting audio signal to the cradle 5 in order to output the sound responsive to the audio signal from the loudspeaker SP of the cradle 5.

The wireless communication module 4 simply selects any desired audio data from the audio data information listed in the plurality of lists in the audio system 1. The wireless communication module 4 thus automatically recognizes the server 3 storing the audio data corresponding to toe selected audio data information, and acquires the audio data from that server 3 to perform the stream reproducing process on that audio data. The user can easily enjoy listening to the sound of the audio data stored dispersedly among the plurality of plurality of servers 3 without being aware that the audio data is dispersedly stored among the plurality of servers 3.

In accordance with the third embodiment, the plurality of lists acquired from the servers 3 is stored as is on the flash memory 60. Alternatively, the plurality of play lists acquired from the server 3 may be tagged with numbers in a predetermined order, and then stored on the flash memory 60. Upon completing the stream reproducing process on the audio data at the end of one play list, the wireless communication module 4 starts the stream reproducing process on the audio data written at the front of a next number play list. In this arrangement, the wireless communication module 4 can reproduce the audio data consecutively across a plurality of play lists. As a result, the wireless communication module 4 reproduces the audio data dispersed among the plurality of servers 3.

In accordance with the third embodiment, the wireless communication module 4 acquires the play list from each server 3 and then stores the play list on the flash memory 60. The present invention is not limited to this arrangement. For example, the wireless communication module 4 may produce a play list based on a data list acquired from each server 3, and then stores the play list on the flash memory 60. The wireless communication module 4 can write in the play list the audio data information of the audio data stored on different servers 3. As a result, the wireless communication module 4 can consecutively reproduce the audio data dispersed among the plurality of servers 3 with a single play list.

In accordance with the third embodiment, the plurality of servers 3 is present in the audio system 1, and the wireless communication module 4 acquires the play list from each of the plurality of servers 3, and stores the play list on the flash memory 60. The present invention is not limited to this arrangement. Alternatively, a single server 3 may be present in the audio system 1. The wireless communication module 4 may acquire a plurality of play lists from the server 3 and store the play lists on the flash memory 60.

In accordance with the third embodiment of the present invention, the list of audio data stored on the server 3 lists the audio data information mapping the server identifier identifying each server 3, the identifier identifying the audio data, and the title of the song corresponding to the audio data. The present invention is not limited to this arrangement. For example, the audio data information of the list may contain information relating to compression (encoding) method and bit rate. Furthermore, the list may have any of a variety of formats.

A fourth embodiment of the present invention is described below. The fourth embodiment is substantially identical to the first embodiment except that the portable audio player 2 has a cellular phone function and that the wireless communication module 4 includes a microphone. The discussion of the cradle 5 and the server 3, each remaining unchanged from the counterpart in the first embodiment, is omitted herein.

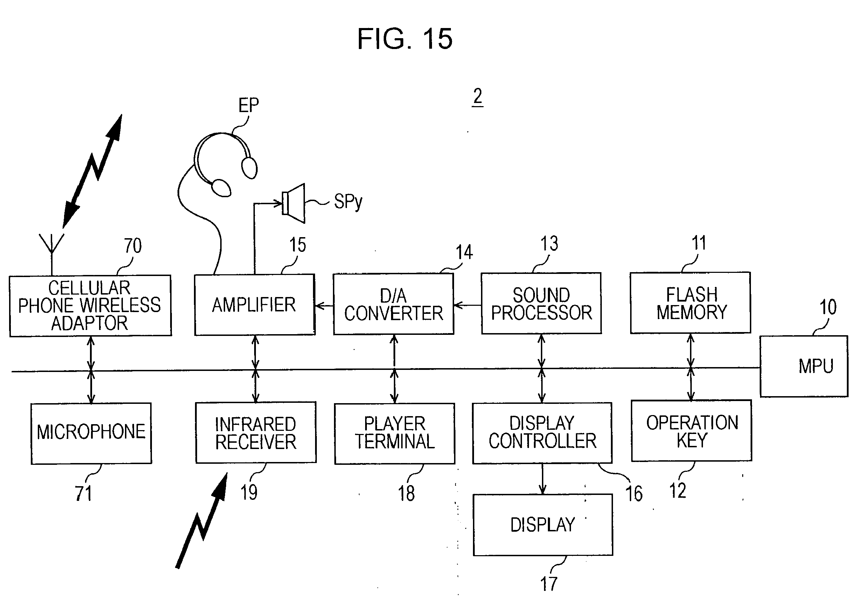

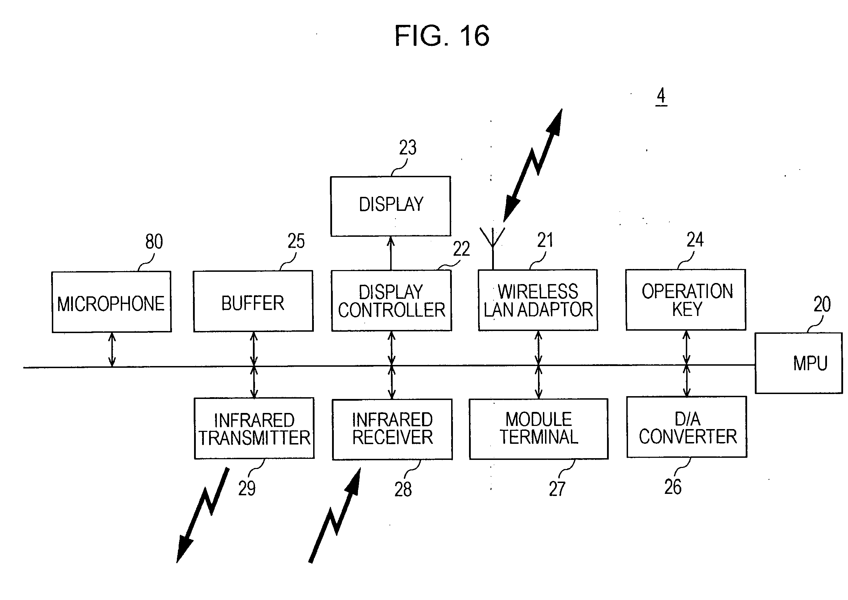

The portable audio player 2 and the wireless communication module 4 in accordance with the fourth embodiment of the present invention are described below with reference to Figs. 15 and 16, respectively. Only the newly added cellular phone function of the portable audio player 2 and the newly added microphone of the wireless communication module 4 are described, and the rest of the portable audio player 2 and the wireless communication module 4 is not discussed herein.

The MPU 10 in the portable audio player 2 is designed to switch between a player mode for the portable audio player 2 to function as an audio player and a communication mode for the portable audio player 2 to function as a cellular phone as necessary. For example, the portable audio player 2, when removed from the cradle 5, receives in the communication mode a. communication signal transmitted from a base station (not shown) using a cellular phone wireless adaptor 70, decodes the received signal into an audio signal, and then supplies the audio signal to the amplifier 15. The sound responsive to the audio signal amplified by the amplifier 15, namely, the voice of a communication partner, is output from an earphone EP or a loudspeaker SPy.

When the voice of the user is picked up by a microphone 71 of the portable audio player 2 as an audio signal, the MPU 10 supplies the audio signal to the cellular phone wireless adaptor 70. The cellular phone wireless adaptor 70 modulates the audio signal to obtain a communication signal, and then transmits the communication signal to the base station.

The portable audio player 2, when unconnected to the cradle 5, outputs the voice of the communication partner from one of the earphone EP and the loudspeaker SPy while picking up the voice of the user with the microphone 71. The portable audio player 2 thus functions as a cellular phone.

With the portable audio player 2 connected to the cradle 5 and in the communication mode, the MPU 10 receives the communication signal transmitted from the base station (not shown) with the cellular phone wireless adaptor 70, decodes the received signal to obtain an audio signal, and supplies the audio signal to the player terminal 18. The audio signal is output to the cradle 5 via the module terminal 27. The sound responsive to the audio signal, namely, the voice of the communication partner, is output from the loudspeaker SP in the cradle 5.

The wireless communication module 4 removed from the cradle 5 functions as a wireless microphone of the portable audio player 2. More specifically, upon receiving the voice of the user as an audio signal via a microphone 80, the MPU 20 in the wireless communication module 4 converts the audio signal into an infrared signal through an infrared transmitter 29 and then transmits the infrared signal to the portable audio player 2.

The MPU 10 in the portable audio player 2 receives the infrared signal transmitted from the wireless communication module 4 through the infrared receiver 19, converts the infrared signal into an audio signal, and supplies the audio signal to the cellular phone wireless adaptor 70. The cellular phone wireless adaptor 70 modulates the audio signal to obtain a communication signal, and then transmits the communication signal to the base station.

The portable audio player 2, when connected to the cradle 5, outputs the voice of the communication partner from the loudspeaker SP of the cradle 5 while picking up the voice of the user with the microphone 80 of the wireless communication module 4 in a wireless communication. The portable audio player 2 thus functions as a cellular phone.

In the audio system 1 in accordance with the fourth embodiment, the portable audio player 2 having the cellular phone function, when connected to the cradle 5 and switched to the communication mode, outputs the sound responsive to the audio signal (namely, the voice of the communication partner) from the loudspeaker SP of the cradle 5. The portable audio player 2 also picks up the voice of the user with the microphone 80 of the wireless communication module 4 wirelessly connected to the portable audio player 2.

Communication is possible with the portable audio player 2 remaining connected to the cradle 5 in the audio system 1. When a telephone call takes place in the middle of the playing of the audio data with the portable audio player 2 connected to the cradle 5, talk can be made without the need for removing the-portable audio player 2 from the cradle 5. The telephone talk is thus conveniently performed.

The wireless communication module 4 removed from the cradle 5 functions as a remote controller of the portable audio player 2 in the audio system 1. An operation to perform a telephone call on the portable audio player 2 and an operation to pick up the portable audio player.2 may be performed on the wireless communication module 4 in a remote manner.

In accordance with the first through fourth embodiments, the reproducing process is performed to one of the portable audio player 2 and the wireless communication module 4 after the one of the portable.audio player 2 and the wireless communication module 4 is mounted on the cradle 5. The loudspeaker SP of the cradle 5 outputs the sound responsive to the audio data stored on.the portable audio player 2 or the sound responsive to the audio data received by the wireless communication module 4. The present invention is not limited to this arrangement. When one of the portable audio player 2 and the wireless communication module 4 is mounted on the cradle 5, the sound responsive to the audio data stored on the portable audio player 2 or the sound responsive to the audio data received by the wireless communication module 4 from the server 3 may be automatically output from the loudspeaker SP of the cradle 5 when one of the portable audio player 2 and the wireless communication module 4 is mounted on the cradle 5.

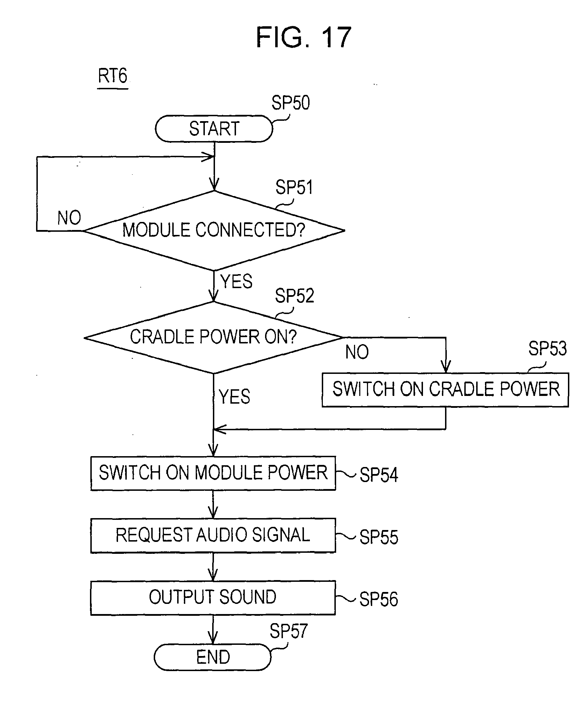

The operational procedure of the cradle 5 in such a case is described below with reference to a flowchart of Fig. 17. When the cradle 5 is supplied with power from an AC adaptor (not shown), the MPU 30 in the cradle 5 starts a process procedure RT6 with step SP50, and then proceeds to step SP51. In step SP51, the MPU 30 waits until one of the portable audio player 2 and the wireless communication module 4 is connected to the cradle 5. Upon recognizing that one of the portable audio player 2 and the wireless communication module 4 is connected to the cradle 5, the MPU 30 proceeds to step SP52.

In step SP52, the MPU 30 determines whether the cradle 5 is in power-on state. The power-on state means that all elements in the cradle 5 are operative, and a power-off state means that only the MPU 30 is operative.

If a non-affirmative answer is obtained in step SP52, the MPU 30 determines that the cradle 5 is in the power-off state and processing proceeds to step SP53. In step SP53, power is set to be on on the cradle 5, and processing proceeds to step SP54. If an affirmative answer is obtained in step SP52, the MPU 30 determines that the cradle 5 is already powered on, and processing proceeds to step SP54.

In step SP54, the MPU 30 transmits to one of the portable audio player 2 and the wireless communication module 4 connected to the cradle 5 a startup signal to power on. The MPU 30 thus powers on one of the portable audio player 2 and the wireless communication module 4 connected to the cradle 5, and then processing proceeds to step SP55.

In step SP55, the MPU 30 transmits to one of the portable audio player 2 and the wireless communication module 4 connected to the cradle 5 an audio signal request signal and proceeds to step S56. If the request signal is transmitted to the portable audio player 2, the MPU 10 in the portable audio player 2 responds to the request signal, selects one piece of audio data stored on the flash memory 11, performs the reproducing process on the selected audio data to obtain the audio signal, and supplies the audio signal to the cradle 5. If the request signal is transmitted to the wireless communication module 4, the MPU 20 in the wireless communication module 4 responds to the request signal, selects the audio data from the list acquired from the server 3, receives the selected audio data from the server 3, performs the stream reproducing process on the received audio data to obtain an audio signal, and outputs the audio signal to the cradle 5.

In step SP56, the MPU 30 outputs from the loudspeaker SP the sound responsive to the audio signal supplied from the connected one of the portable audio player 2 and the wireless communication module 4. Upon recognizing that the power-off operation is performed on the cradle 5 via the operation key 31, the MPU 30 proceeds to step SP57 to complete the process procedure RT6.

The cradle 5 is thus operated in accordance with the process procedure RT6. By mounting simply one of the portable audio player 2 and the wireless communication module 4 on the cradle 5, all process from power-on operation to the audio system 1 through outputting the sound from the loudspeaker SP of the cradle 5 is automatically performed.

One of the portable audio player 2 and the wireless communication module 4 connected to the cradle 5 may automatically select the audio data to be reproduced. When the reproducing process of the selected audio data is completed, the audio data to be reproduced next may also be automatically selected for consecutive playing. In this case, one of the portable audio player 2 and the wireless communication module 4 connected to the cradle 5 may select the audio data at random or in the order specified in the play list, or in the order manually set by the user.

In accordance with the first through fourth embodiments of the present invention, the wireless communication module 4 includes the wireless LAN adaptor 21 complying with the wireless LAN standard and the server 3 includes the wireless LAN adaptor 44 complying with the wireless LAN standard in order to permit wireless communication between the wireless communication module 4 and the server 3. The present invention is not limited to this arrangement. Each of the wireless communication module 4 and the server 3 may include a device of any type of wireless communication as long as wireless communication is permitted between the wireless communication module 4 and the server 3.

In accordance with the first, third and fourth embodiments of the present invention, the wireless communication module 4 includes the infrared receiver 28 and the portable audio player 2 includes the infrared receiver 19 in order to establish wireless communication between the wireless communication module 4 and the portable audio player 2. The present invention is not limited to this arrangement. Each of the wireless communication module 4 and the portable audio player 2 may include a device of one of other types of communication method such as a short-range wireless communication adaptor complying with the Bluetooth (Registered Trademark) standard for two-way communication instead of the infrared receiver 28 and the infrared receiver 19.

With a short-range communication adaptor, the wireless communication module 4 operating as a remote controller of the portable audio player 2 may not only transmit a command to the portable audio player 2 but also receive the list of audio data and incidental information from the portable audio player 2 to display these piece of information on the display 23.

In accordance with the first, third and fourth embodiments of the present invention, the wireless communication module 4 removed from the cradle 5 functions as a remote controller of the portable audio player 2. The present invention is not limited to this arrangement. The wireless communication module 4 may function as a remote controller of the cradle 5. The portable audio player 2 removed from the cradle 5 may function as a remote controller of the wireless communication module 4. In this case, the portable audio player 2 may include an infrared transmitter and when the MPU 10 in the portable audio player 2 recognizes a command input to the wireless communication module 4 via the operation key 12, the infrared transmitter converts the command into an infrared signal to transmit the infrared signal to the wireless communication module 4.

In accordance with the first through fourth embodiments, the portable audio player 2 includes the flash memory 11 storing the audio data. Any other storage device such as a hard disk or a removable memory card may be acceptable as long as the device stores the audio data. The flash memory 60 in the wireless communication module 4 in the fourth embodiment of the present invention may also be replaced with another type of storage device.

In accordance with the first through fourth embodiments, the encoded (compressed) audio data is decoded on the server 3 and then transmitted to the wireless communication module 4. Alternatively, the wireless communication module 4 may include a sound processor that can decode the encoded (compressed) audio data from the server 3 so that audio data stored on the server 3 may be transmitted to the wireless communication module 4 in the encoded (compressed) state thereof.

In accordance with the first through fourth embodiments of the present invention, one of the portable audio player 2 and the wireless communication module 4 digital-to-analog converts the audio data into the audio signal and outputs the audio signal to the cradle 5. Alternatively, the audio signal is transferred to the cradle 5 in the digital form. In this case, the audio data is directly input to the sound processor 33.

In accordance with the first through fourth embodiments of the present invention, the audio system 1 outputs the sound responsive to the audio data. Alternatively, the present invention is applicable to a variety of data output systems outputting time-series play data including a video system outputting a video responsive to video data.

When the present invention is applied to a video system that outputs a video responsive to video data, the video system may include a portable video player for storing and reproducing the video data, a server for storing the video data, a wireless communication module for performing stream reproducing process on the video data received from the server, and a cradle, including a display, to be electrically connected to one of the portable player and the wireless communication module when the one of the portable player and the wireless communication module is mounted on the cradle.

When the portable video player is mounted on the cradle, the video data stored on a flash memory in the portable video player is reproduced. A video signal resulting from the reproducing process is then output to the cradle. The video responsive to the video signal is output from the display. When the wireless communication module is mounted on the cradle, the wireless communication module receives the video data stored on the server in a wireless communication, performs the stream reproducing process on the video data, and outputs the resulting video signal to the cradle. The video responsive to the video signal is then output from the display.

In accordance with the first through fourth embodiments of the present invention, the wireless communication module 4 includes no storage device for storing the audio data and performs the stream reproducing process on the audio data transmitted from the server 3. Alternatively, the wireless communication module 4 may include a storage device for storing the audio data. The audio data transmitted from the server 3 is stored on the storage device first and then read and reproduced.

In accordance with the first through fourth embodiments of the present invention, the audio data of several minutes is accumulated on the buffer 25 in the stream reproducing process of the wireless communication module 4, and the MPU 20 transfers the accumulated audio data to the digital-to-analog (D/A) converter 26 while deleting the accumulated audio data from the buffer 25. Alternatively, a portion of the accumulated audio data is supplied to the D/A converter 26 and the same portion of the accumulated audio data is deleted from the buffer 25. In this arrangement, audio data of several seconds always remains on the buffer 25. The audio data remaining on the buffer 25 is not continuously stored after the stream reproducing process but temporarily stored on the buffer 25.

In accordance with the first through fourth embodiments of the present invention, the cradle 5 includes the loudspeaker SP. Alternatively, the loudspeaker SP may be arranged external to the cradle 5. The audio signal amplified by the amplifier 35 may be supplied to the external loudspeaker SP.

In accordance with the first through fourth embodiments of the present invention, the list of audio data is used as the management information data for identifying the audio data stored on the server 3. Alternatively, any other type of management information data may be used as long as the data can identify the audio data stored on the server 3.

In accordance with the first through fourth embodiments of the present invention, the MPU 10 in the portable audio player 2 performs the above-described process in accordance with the program installed on the internal memory of the MPU 10. Alternatively, the program for performing the above-described process may be installed on a separately arranged memory or another recording medium such as a compact disk (CD).

In accordance with the first through fourth embodiments of the present invention, the MPU 20 in the wireless communication module 4 performs the above-described process in accordance with the program installed on the internal memory of the MPU 20. Alternatively, the program for performing the above-described process may be installed on a separately arranged memory or another recording medium such as a CD.

In accordance with the first through fourth embodiments of the present invention, the MPU 30 in the cradle 5 performs the above-described process in accordance with the program installed on the internal memory of the MPU 30. Alternatively, the program for'performing the above-described process may be installed on a separately arranged memory or another recording medium such as a CD.

In accordance with the first through fourth embodiments of the present invention, the CPU 40 in the server 3 performs the above-described process in accordance with the program installed on the internal memory of the CPU 40. Alternatively, the program for performing the above-described process may be installed on a separately arranged memory or another recording medium such as a CD.

In accordance with the first through fourth embodiments of the present invention, the portable audio player 2 as a first terminal includes but is not limited to the MPU 10, the flash memory 11 storing the time-series play data, the operation key 12 as an operation unit, the sound processor 13, the D/A converter 14, the amplifier 15, the display controller 16, the display 17, the player terminal 18, the infrared receiver 19 communicating with the wireless communication module 4 in a wireless communication, the cellular phone wireless adaptor 70, the microphone 71, the earphone EP, and the loudspeaker SPy. The portable audio player 2 may have any other configuration as long as the same function is provided.

In accordance with the first through fourth embodiments of the present invention, the wireless communication module 4 as a second terminal includes but is not limited to the MPU 20, the wireless LAN adaptor 21 as a first wireless communication unit for wireless communicating with the server 3, the display controller 22, the display 23, the operation key 24 as an operation unit, the buffer 25, the D/A converter 26, the module terminal 27, the infrared receiver 28, the infrared transmitter 29 as a second wireless communication unit for wireless communicating with the portable audio player 2, the amplifier 50, the flash memory 60 as a storage unit for storing the management information data acquired from each of the plurality of servers 3, the microphone 80, and the loudspeaker SPx as an output unit for outputting the time-series play data. The wireless communication module 4 may have any other configuration as long as the same function is provided.

In accordance with the first through fourth embodiments of the present invention, the cradle 5 as a mounting base device includes but is not limited to the cradle terminal 5B, the MPU 30, the operation key 31, the A/D converter 32, the sound processor 33, the D/A converter 34, the amplifier 35, the display controller 36, the display 37, and the loudspeaker SP as an output unit for outputting the time-series play data. The cradle 5 may have any other configuration as long as the same function is provided.

In accordance with the first through fourth embodiments of the present invention, the server 3 as an information processing apparatus includes but is not limited to the CPU 40, the hard disk drive 41 as a storage unit for storing the time-series play data, the ROM 42, the RAM 43, the wireless LAN adaptor 44 as a wireless communication unit for wireless communicating with the wireless communication module 4, and the sound processor 45. The server 3 may have any other configuration as long as the same function is provided. In accordance with the first through fourth embodiments of the present invention, the MPU 10 in the portable audio player 2, the MPU 20 in the wireless communication module 4, the MPU 30 in the cradle 5, and the CPU 40 in the server 3 perform the processes of Figs. 8-11, and Figs. 13 and 17, respectively by reading the respective programs from the respective internal memories. Alternatively, the processes may be executed using hardware.

It should be understood by those skilled in the art that various modifications, combinations, sub-combinations and alterations may occur depending on design requirements and other factors insofar as they are within the scope of the appended claims or the equivalents thereof.

## Claims

1. A data output system comprising:
an information processing-apparatus, a first terminal, a second terminal, and a mounting base device that is electrically connected to one of the first terminal and the second terminal when the one of the first terminal and the second terminal is mounted on the mounting base device, the information processing apparatus including a storage for storing time-series play data, and a wireless communication unit for communicating with the second terminal in a wireless communication, the first terminal including a storage for storing time-series play data, the second terminal including a first wireless communication unit for communicating with the information processing apparatus in a wireless communication, and the mounting base device including an output unit for outputting time-series play data,
wherein when the mounting base device is electrically connected to the first terminal mounted thereon, the time-series play data stored on the first terminal is output to the mounting base device, and then output from the output unit of the mounting base device, and
wherein when the mounting base device is electrically connected to the second terminal mounted thereon, the second terminal acquires the time-series play data from the information processing apparatus in a wireless communication and transfers the acquired time-series play data to the mounting base device, and then the output unit of the mounting base device outputs the time-series play data.

2. The data output system according to claim 1, wherein the second terminal comprises an operation unit, and wherein the second terminal, when unconnected to the mounting base device, transmits a command to the information processing apparatus in a wireless communication in response to an operation input entered to the operation unit.

3. The data output system according to claim 1 or 2, wherein the mounting base device comprises a wireless communication unit for communicating with the second terminal in a wireless communication, and
wherein the second terminal comprises an operation unit and a second wireless communication unit for communicating with the mounting base device in a wireless communication, and
wherein the second terminal, when unconnected to the mounting base device, transmits a command to the mounting base device in a wireless communication in response to an operation input entered to the operation unit.

4. The data output system according to claim 1, 2 or 3 wherein the first terminal comprises a wireless communication unit for communicating with the second terminal in a wireless communication, and
wherein the second terminal comprises an operation unit and a second wireless communication unit for communicating with the first terminal in a wireless communication, and wherein the second terminal, when unconnected to the mounting base device, transmits a command to the first terminal in a wireless communication in response to an operation input entered to the operation unit.

5. The data output system according to any preceding claim, wherein the second terminal comprises an output unit for outputting time-series play data, and
wherein.the second terminal, when unconnected to the mounting base terminal, outputs from the output unit thereof the time-series play data acquired from the information processing apparatus.

6. The data output system according to claim 5, wherein when the second terminal with the output unit thereof in the middle of outputting of the time-series play data acquired from the information processing apparatus is mounted on and connected to the mounting base device, the second terminal outputs the time-series play data and then the output unit of the mounting base device outputs the received time-series play data starting with a leading portion of the time-series play data.

7. The data output system according to claim 6, wherein when the second terminal with the output unit thereof in the middle of outputting of the time-series play data acquired from the information processing apparatus is mounted on and connected to the mounting base device, the output unit of the mounting base device outputs the received time-series play data after a predetermined period of time.

8. The data output system according to any preceding claim, wherein the second terminal acquires management information data of the time-series play data stored on the information processing apparatus, and acquires the time-series play data based on the management information data, and then outputs the acquired time-series play data to the mounting base device.

9. The data output system according to any preceding claim, further comprising a plurality of information processing apparatuses,
wherein the second terminal includes a storage for storing management information data of the time-series play data acquired from each of the plurality of information processing apparatuses, and
wherein the second terminal acquires the management information data of the time-series play data from each of the plurality of information processing apparatuses, stores the management information data on the storage thereof, acquires the time-series play data from each of the plurality of information processing apparatuses based on the stored management information data, and then transmits the acquired time-series play data to the mounting base device.

10. A terminal comprising:
a wireless communication unit for communicating with an information processing apparatus in a wireless communication;
a storage for storing data;
a connection unit for connection with a mounting base unit;
and
a controller for causing the wireless communication unit to acquire from the information processing apparatus time-series play data, and causing the connection unit to transmit the time-series play data to the mounting base device.

11. The terminal according to claim 10, further comprising an operation unit,
wherein when the terminal is unconnected to the mounting base device, the controller controls the wireless communication unit to transmit a command to the information processing apparatus in a wireless communication in response to an operation input entered to the operation unit.

12. The terminal according to claim 10 or 11, further comprising:
an operation unit; and
the other wireless communication unit for communicating with the mounting base device,
wherein when the terminal is unconnected to the mounting base device, the controller controls the other wireless communication unit to transmit a command to the mounting base device in a wireless communication in response to an operation input entered to the operation unit.

13. The terminal according to claim 10, 11 or 12, further comprising:
an operation unit; and
the other wireless communication unit for communicating with the other terminal,
wherein when the terminal is unconnected to the mounting base device, the controller controls the other wireless communication unit to transmit a command to the other terminal in a wireless communication in response to an operation input entered to the operation unit.

14. The terminal according to claim 10, 11, 12 or 13, further comprising:
an output unit for outputting the time-series play data,
wherein when the terminal is unconnected to the mounting base device, the controller causes the output unit thereof to output the time-series play data.

15. The terminal according to claim 14, wherein when the terminal with the output unit thereof in the middle of outputting of the time-series play data is connected to the mounting base device, the controller causes the connection unit to transmit the acquired time-series play data to the mounting base device starting with a leading portion of the time-series play data.

16. The terminal according to claim 15, wherein when the terminal with the output unit thereof in the middle of outputting of the time-series play data is connected to the mounting base device, the controller causes the connection unit to transmit the acquired time-series play data to the mounting base device starting with the leading portion of the time-series play data after a predetermined period of time.

17. The terminal according to any one of claims 10 to 16, wherein the controller acquires management information data of the time-series play data stored on the information processing apparatus, causes the communication unit to acquire the time-series play data stored on the information processing apparatus based on the management information data, and then causes the connection unit to output the acquired time-series play data to the mounting base device.

18. The terminal according to any one of claims 10 to 17, wherein a plurality of information processing apparatuses is present, and
wherein the controllers acquires management information data of the time-series play data from each of the plurality of information processing apparatuses, acquires the time-series play data from each of the plurality of information processing apparatuses based on the management information data, and then transmits the time-series play data to the mounting base device.

19. An information processing method comprising steps of:
acquiring from an information processing apparatus time-series play data using a wireless communication unit;
transmitting the time-series play data to a mounting base device with a connection unit; and
controlling the wireless communication unit to transmit a command to the information processing apparatus in a wireless communication in response to an operation input entered to an operation unit when the mounting base device is unconnected.

20. An information processing method comprising steps of:
acquiring from an information processing apparatus time-series play data using a wireless communication unit;
transmitting the time-series play data to a mounting base device using a connection unit;
causing an output unit to output the time-series play data when the mounting base device is unconnected; and
causing the connection unit to transmit the time-series play data to the mounting base device starting with a leading portion of the time-series play data when the mounting base device is connected in the middle of the time-series play data being output from the output unit.
